# EUROPÄISCHE PATENTSCHRIFT

(11) **EP 2 182 226 B1**
(45) Veröffentlichungstag und Bekanntmachung des Hinweises auf die Patenterteilung: **25.07.2012**
(21) Anmeldenummer: 10000840.8
(22) Anmeldetag: 29.03.2007
(51) Int. Cl.: F16B 37/04

(54) **Befestigungsvorrichtung**
Fastening device
Dispositif de fixation

(30) Priorität: 26.04.2006 DE 102006019256; 22.12.2006 DE 102006019411
(43) Veröffentlichungstag der Anmeldung: 05.05.2010
(62) Teilanmeldung aus: 07723728.7
(73) Patentinhaber: A. Raymond et Cie., 38000 Grenoble (FR)
(72) Erfinder: Hullmann, Klaus, 79540 Lörrach (DE); De Jong, Michael, 79589 Binzen (DE); Eckert, Thomas, 79713 Bad Säckingen (DE)
(74) Vertreter: Rüttgers, Joachim

(56) Entgegenhaltungen:
- EP-A1- 0 930 440
- EP-A1- 1 510 702
- ES-A1- 2 163 363
- US-A- 6 095 734
- US-A1- 2003 071 475

## Beschreibung

Die Erfindung betrifft eine Befestigungsvorrichtung gemäß dem Oberbegriff des Patentanspruches 1.

Eine derartige Befestigungsvorrichtung ist aus DE 35 24 651 A1 bekannt. Die vorbekannte Befestigungsvorrichtung zum Befestigen eines Anbauteiles an einem Trägerteil verfügt über eine Deckplatte und zwei an einander gegenüberliegenden Seiten der Deckplatte angeordnete Klammerarme. Jeder Klammerarm weist einen an der Deckplatte angesetzten Innenschenkel und einen Außenschenkel auf, wobei an dem Außenschenkel an seiner der Deckplatte zugewandten Stirnseite ein flacher Zungenabschnitt einer Abstützstruktur angeformt ist. Der Zungenabschnitt greift in eine in dem Innenschenkel ausgebildete, den Zungenabschnitt eng umgebende Aufnahmeausnehmung ein, wobei sich in der Einbausituation die Zungenabschnitte in einer im wesentlichen parallelen Ausrichtung zu der Deckplatte an der dem Anbauteil gegenüberliegenden Rückseite des Trägerteiles abstützen.

Zwar werden mit einer derartigen Befestigungsvorrichtung sehr hohe Auszugskräfte erzielt, allerdings ist von Nachteil, dass die Befestigungsvorrichtung innerhalb verhältnismäßig geringer Toleranzen an die Dicke des Trägerteiles angepasst sein muss.

Der Erfindung liegt die Aufgabe zugrunde, eine Befestigungsvorrichtung der eingangs genannten Art anzugeben, dass bei relativ hohen Auszugskräften mit in ihrer Dicke über eine verhältnismäßig großen Bereich variierenden Trägerteilen einsetzbar ist.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung die Abstützstruktur durch an Seitenrändern der Außenschenkel angeformte Seitenwangen mit angeschrägten Stirnseiten aufweist, passen sich die Klammerarme selbsttätig an die Dicke des jeweiligen Trägerteiles an, indem die Seitenwangen mehr oder weniger tief in die Aufnahmeausnehmung eintauchen. Durch das Abstützen der Rückseiten der Seitenwangen an Stützvorsprüngen ergibt sich durch Zugstabilisierung eine relativ hohe Auszugskraft.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Befestigungsvorrichtung,
- Fig. 2: in einer Schnittansicht das Ausführungsbeispiel gemäß Fig. 1 in einer Einbausituation,
- Fig. 3: in einer perspektivischen Ansicht ein weiteres Ausführungsbeispiel einer erfindungsgemäßen Vorrichtung,
- Fig. 4: in einer Schnittansicht das Ausführungsbeispiel gemäß Fig. 3,
- Fig. 5: in einer Schnittansicht ein weiteres Ausführungsbeispiel einer erfindungsgemäßen Befestigungsvorrichtung mit an ihren freien Enden miteinander verriegelten Klammerarmen und
- Fig. 6: in einer Schnittansicht ein weiteres Ausführungsbeispiel einer erfindungsgemäßen Befestigungsvorrichtung mit sich in einen zwischen Klammerarmen ausgebildeten Schraubenaufnahmeraum erstreckenden Spreizzungen.

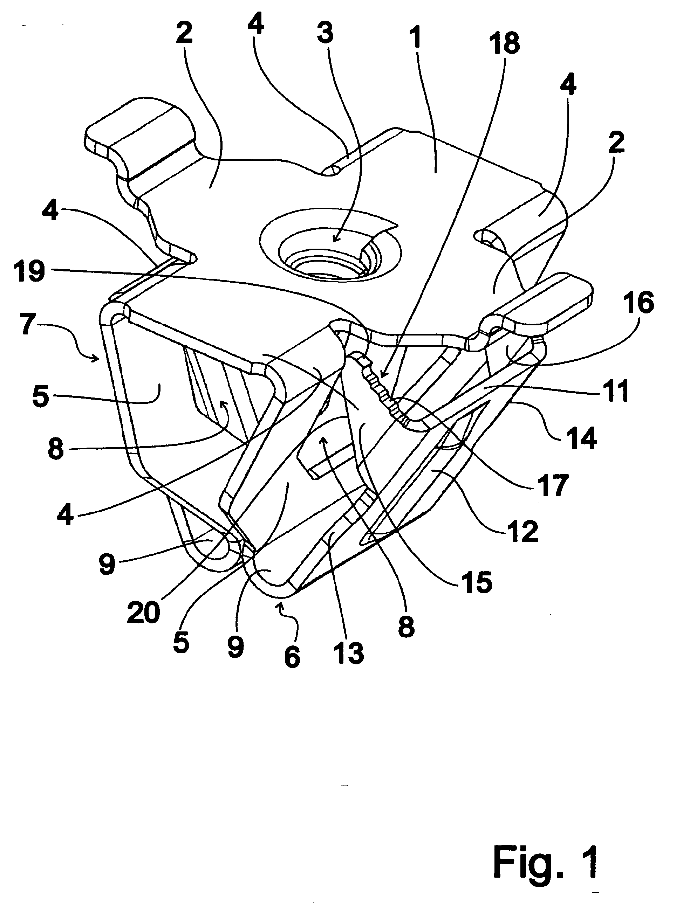

Fig. 1 zeigt in einer perspektivischen Ansicht ein Ausführungsbeispiel einer aus Blech gestanzten und gebogenen, zum Einfügen in ein in Fig. 1 nicht dargestelltes Trägerteil vorgesehenen erfindungsgemäßen Vorrichtung, die über eine im wesentlichen rechteckförmigen Deckplatte 1 verfügt. An einander gegenüberliegenden Langseiten der Deckplatte 1 sind sich von der Deckplatte 1 weg nach außen erstreckende Auflagezungen 2 angesetzt, die bei dem Ausführungsbeispiel gemäß Fig. 1 an ihrem von der Deckplatte 1 abgewandten Ende stufenförmig gebogen sind.

In der Mitte der Deckplatte 1 ist eine Gewindestruktur 3 beispielsweise in Gestalt eines Stanzgewindes vorhanden, in die zum Befestigen eines Anbauteiles an dem Trägerteil eine in Fig. 1 nicht dargestellte Schraube einschraubbar ist.

Beidseitig jeder Auflagezunge 2 sind jeweils ein Anbindungsabschnitt 4 ausgebildet, über die jeweils ein Innenschenkel 5 eines Klammerarmes 6, 7 an die Deckplatte 1 angesetzt ist. Die Innenschenkel 5 weisen in ihrem der Deckplatte 1 benachbarten Bereich jeweils eine Aufnahmeausnehmung 8 auf und erstrecken sich auf einer Seite der Deckplatte 1 aufeinander zu, so dass die Klammerarme 6, 7 mit ihren von der Deckplatte 1 abgewandten Enden vorzugsweise aneinander anliegen oder wenigstens dicht benachbart angeordnet sind.

An den von der Deckplatte 1 abgewandten Enden weisen die Klammerarme 6, 7 jeweils einen an den jeweiligen Innenschenkel 5 angesetzten, um etwa 180 Grad umgebogenen Umbiegeabschnitt 9 auf, an den weiterhin jeweils ein Außenschenkel 10 angeformt ist. Jeder Außenschenkel 10 erstreckt sich von dem Umbiegeabschnitt 9 in etwa parallel zu dem innenseitig gegenüberliegenden Innenschenkel 5 in Richtung der Deckplatte 1 und endet mit seiner der Deckplatte 1 zugewandten, gegenüber der Breite des Außenschenkel 10 im Ansatzbereich an den Umbiegeabschnitt 9 schmaleren Stirnseite 11 in einem Abstand von der Deckplatte 1, der größer als die Dicke des mit der erfindungsgemäßen Befestigungsvorrichtung einsetzbaren Trägerteiles ist. Zum Erhöhen der Steifigkeit der Außenschenkel 10 sowie zum Verringern der Montagekraft der erfindungsgemäßen Vorrichtung gemäß Fig. 1 sind in die Außenschenkel 10 jeweils eine sich in Längsrichtung der Außenschenkel 10 erstreckende und zu der Außenseite ausgewölbte Sicke 12 eingeformt.

An den Seitenrändern 13, 14 der Außenschenkel 10 sind in deren an die Stirnseite 11 angrenzenden Bereich flügelartige Seitenwangen 15, 16 angeformt, die von einer ursprünglich in der Ebene der Außenschenkel 10 liegenden Anordnung im wesentlichen rechtwinklig in Richtung des gegenüberliegenden Klammerarmes 6, 7 umgebogen worden sind und paarweise einander gegenüberliegen. Die über die Außenschenkel 10 überstehende Länge der Seitenwangen 15, 16 ist kleiner oder höchstens gleich dem Abstand der Innenschenkel 5 im Bereich der Seitenwangen 15, 16, so dass die Außenschenkel 10 bis zur Anlage an die Innenschenkel 5 einfedern können. Bei dem Ausführungsbeispiel gemäß Fig. 1 greifen die Seitenwangen 15, 16 in die Aufnahmeausnehmung 8 des jeweiligen Innenschenkels 5 ein.

Weiterhin lässt sich Fig. 1 entnehmen, dass die Seitenwangen 15, 16 an ihren der Deckplatte 1 zugewandten Stirnseiten 17 mit einer aus Erhebungen und Vertiefungen gebildeten Stufenstruktur 18 ausgebildet sind. An dem von dem Außenschenkel 10 wegweisenden Ende jede Seitenwange 15, 16 ist als Abschlusserhebung eine in Richtung der Deckplatte 1 über die Stirnseite 17 überstehende Blockiernase 19 vorhanden. Von dem von dem Außenschenkel 10 abgewandten Ende der Seitenwangen 15, 16 erstrecken sich eine schräge Rückseite 20 zu dem Außenschenkel 10, so dass die Dimension jeder Seitenwange 15, 16 in Längsrichtung von dem Außenschenkel 10 zu dem von dem Außenschenkel 10 abgewandten Ende kontinuierlich abnimmt.

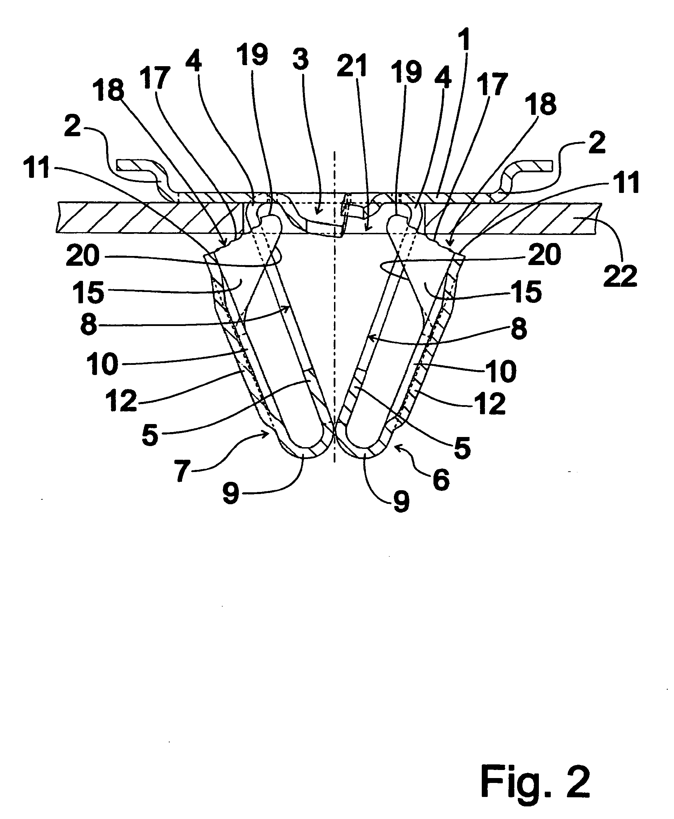

Fig. 2 zeigt in einer Schnittansicht das Ausführungsbeispiel gemäß Fig. 1 in einer Einbausituation in einem mit einer Einsteckausnehmung 21 ausgebildeten Trägerteil 22. Aus Fig. 2 ist ersichtlich, dass nach Durchführen der Klammerarme 6, 7 durch die Einsteckausnehmung 21 die Außenschenkel 10 soweit ausgefedert sind, bis die Stirnseiten 17 der Seitenwangen 15, 16 an dem Rand der Einsteckausnehmung 21 anliegen, wobei in Abhängigkeit der Dicke des jeweiligen Trägerteiles 22 die Außenschenkel 10 mehr oder weniger weit ausfedern. Dabei dienen die Stufenstrukturen 18 aufgrund ihrer Verkrallung mit dem Rand der Einsteckausnehmung 21 beim Eindrehen einer Schraube und Aufspreizen der von der Deckplatte 1 abgewandten Enden der Klammerarme 6, 7 zum Verhindern eines unbeabsichtigten Eindrückens der Außenschenkel 10 in Richtung der Innenschenkel 5, während die Blockiernasen 19 ein vollständiges Ausfedern der Außenschenkel 10 bis zu einer gewissen Minimaldicke des Trägerteiles 22 verhindern.

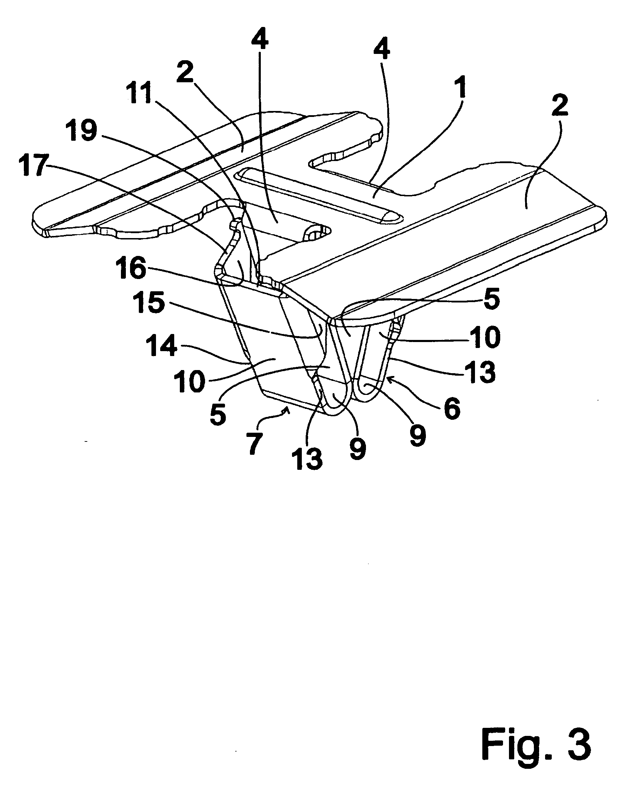

Fig. 3 zeigt in einer perspektivischen Ansicht ein weiteres Ausführungsbeispiel einer erfindungsgemäßen Vorrichtung, wobei sich bei den Ausführungsbeispielen gemäß Fig. 1, Fig. 2 sowie Fig. 3 sich wenigstens funktional entsprechende Elemente mit den gleichen Bezugszeichen versehen und im weiteren nicht näher erläutert sind. Aus Fig. 3 ist ersichtlich, dass bei diesem Ausführungsbeispiel die Breite der Innenschenkel 5 und der Außenschenkel 10 im wesentlichen gleich ist, so dass die Innenschenkel 5 zwischen den Seitenwangen 15, 16 angeordnet sind

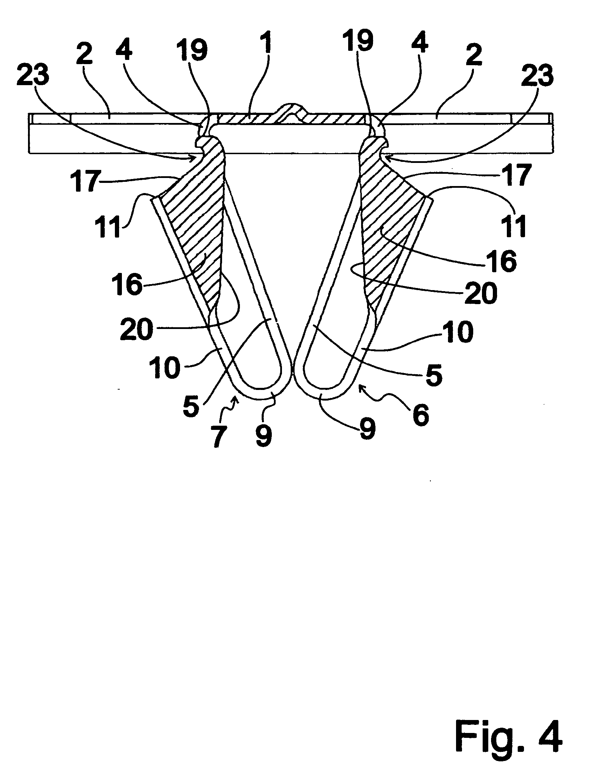

Fig. 4 zeigt das Ausführungsbeispiel gemäß Fig. 3 in einer Schnittansicht in Längsrichtung. Fig. 4 lässt sich entnehmen, dass bei diesem Ausführungsbeispiel die Stirnseiten 17 der Seitenwangen 15, 16 glattflächig ausgebildet sind, während die Blockiernasen 19 jeweils mit einer in Richtung der Außenschenkel 10 geöffneten Werkzeugansatzvertiefung 23 als Vertiefung ausgebildet sind.

Das ohne eine Gewindestruktur zur Aufnahme einer Schraube ausgebildete Ausführungsbeispiel gemäß Fig. 3 und Fig. 4 wird in eine Einsteckausnehmung eines Trägerteiles eingesteckt, wobei die Klemmwirkung allein durch das Ausfedern der Außenschenkel 10 erzielt wird. Durch Einführen eines in Fig. 3 und Fig. 4 nicht dargestellten Lösewerkzeugs in die Werkzeugansatzvertiefungen 23 lassen sich die Außenschenkel 10 in Richtung der Innenschenkel 5 bewegen, bis die Stirnseiten 11 der Außenschenkel 10 innerhalb der Umrandung der Einsteckausnehmung liegen und somit die erfindungsgemäße Vorrichtung wieder aus dem Trägerteil herausgezogen werden kann. Diese Demontierbarkeit wird durch die glattflächigen Stirnseiten 17 der Seitenwangen 15, 16 unterstützt, da keine ausgeprägte Verkrallung mit der Umrandung der Einsteckausnehmung auftritt.

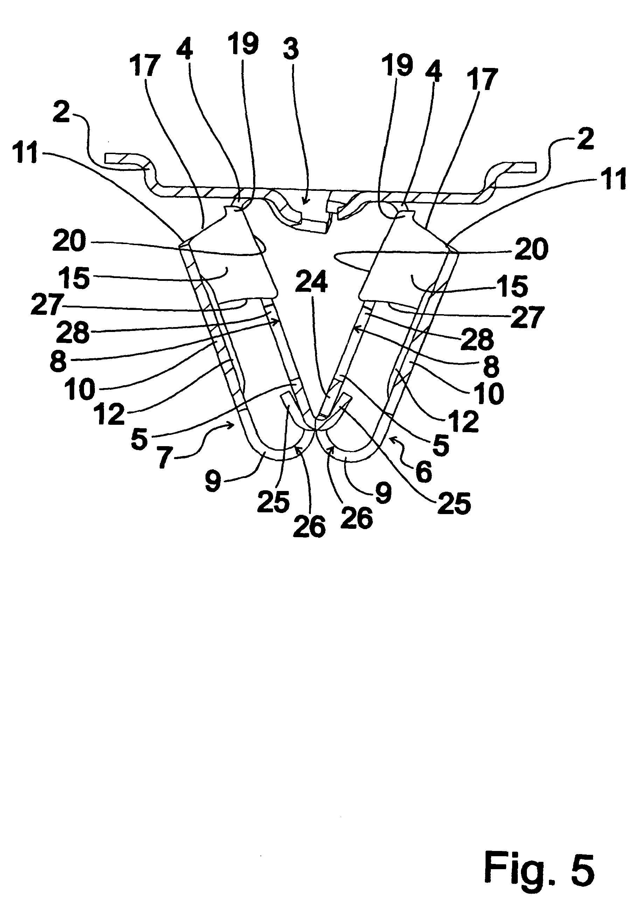

Fig. 5 zeigt in einer Schnittansicht in Längsrichtung ein weiteres Ausführungsbeispiel einer erfindungsgemäßen Vorrichtung, wobei sich bei den Ausführungsbeispielen gemäß Fig. 1 bis Fig. 4 und Fig. 5 entsprechende Elemente mit den gleichen Bezugszeichen versehen und im weiteren nicht näher erläutert sind. Bei dem Ausführungsbeispiel gemäß Fig. 5 ist an jedem Innenschenkel 5 im Bereich des jeweiligen Anbindungsabschnittes 9 ein sich in Querrichtung erstreckender Hintergriffsteg 24 und eine sich in Richtung des anderen Innenschenkels 5 erstreckende, in Richtung der Deckplatte 1 umgebogene Hintergriffzunge 25 ausgebildet ist, die durch eine in dem Anbindungsabschnitt 9 des anderen Klammerarmes 6, 7 eingebrachte Durchgriffsausnehmung 26 durchgreift und den Hintergriffsteg 24 des anderen Innenschenkels 5 hintergreift. Dadurch sind die die Klammerarme 6 an ihren von der Deckplatte 1 abgewandten Enden gegen ein Aufspreizen miteinander verriegelt, was insbesondere bei einseitigen Belastungen von Vorteil ist, um bei einer einseitigen Belastung ein Wegbiegen eines Klammerarmes 6, 7 zu vermeiden.

Weiterhin lässt sich Fig. 5 entnehmen, dass an den Seitenwangen 15, 16 auf den der Deckplatte 1 abgewandten Seiten vorzugsweise in etwa rechtwinklig zu der Längsrichtung der Klammerarme 6, 7 ausgerichtete Rückseiten 27 ausgebildet sind, die gegenüberliegend von in die Aufnahmeausnehmungen 8 eintretenden, in Fig. 5 durch ihre Randkanten dargestellten Stützvorsprüngen 28 angeordnet sind. Dadurch ist die Befestigungsvorrichtung gemäß dem Ausführungsbeispiel nach Fig. 5 gegenüber einer Zugbelastung stabilisiert, da sich bei Ausüben einer Zugbelastung die Rückseiten 27 an den Stützvorsprüngen 28 abstützen.

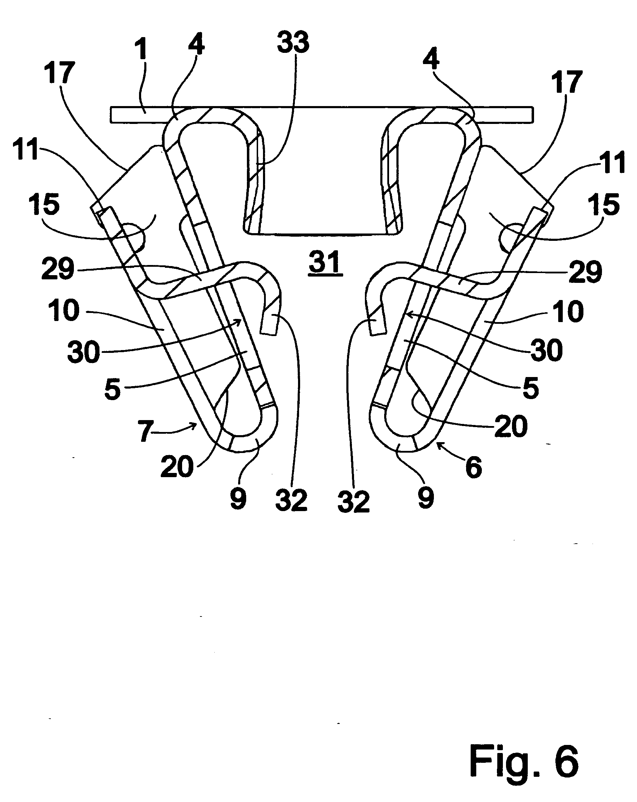

Fig. 6 zeigt in einer Schnittansicht in Längsrichtung ein weiteres Ausführungsbeispiel einer erfindungsgemäßen Vorrichtung, wobei sich bei den Ausführungsbeispielen gemäß Fig. 1 bis Fig. 5 und Fig. 6 entsprechende Elemente mit den gleichen Bezugszeichen versehen und im weiteren nicht näher erläutert sind. Bei dem Ausführungsbeispiel gemäß Fig. 6 ist bei jedem Klammerarm 6, 7 an dem Außenschenkel 10 eine sich in Richtung des anderen Klammerarmes 6, 7 erstreckende Spreizzunge 29 angeformt, die durch eine in dem gegenüberliegenden Innenschenkel 9 eingebrachte Freimachung 30 durchgreift und in einen zwischen den Klammerarmen 6, 7 ausgebildeten Schraubenaufnahmeraum 31 eintreten. Jede Spreizzunge 29 ist an ihrem von dem jeweiligen Außenschenkel 10 abgewandten freien Ende mit einem flachen Endabschnitt 32 in Richtung der Umbiegeabschnitte 9 umgebogen, wobei die Endabschnitte 32 in etwa parallel zueinander ausgerichtet sind und in Längsrichtung in der Mitte des Schraubenaufnahmeraumes 31 mit einem Abstand einander gegenüberliegen.

Bei dem Ausführungsbeispiel gemäß Fig. 6 ist an der Deckplatte 1 eine in den Schraubenaufnahmeraum 31 hineinragende Einschraubhülse 33 mit einem Innenfeingewinde angeformt, in die eine in Fig. 6 nicht dargestellte Schraube mit einem zu dem Innenfeingewinde komplementären Außenfeingewinde einschraubbar ist. Durch das Anordnen der Endabschnitte 32 in etwa in der Mitte des Schraubenaufnahmeraumes 31 erfolgt bereits sehr frühzeitig das Verspannen der Klammerarme 6, 7 zunächst über ein Aufweiten der Außenschenkel 10 und über die Umbiegeabschnitte 9 auch der Innenschenkel 5.

## Patentansprüche

1. Befestigungsvorrichtung zum Einfügen in ein Trägerteil (22) mit einer Deckplatte (1) und mit zwei an gegenüberliegenden Randseiten an der Deckplatte (1) angesetzten sowie auf einer Seite der Deckplatte (1) einander gegenüberliegenden Klammerarmen (6, 7), wobei jeder Klammerarm (6, 7) einen dem anderen Klammerarm (6, 7) zugewandten Innenschenkel (5) und einen dem anderen Klammerarm (6, 7) abgewandten Außenschenkel (10) aufweist, der mit einem Anbindungsabschnitt (9) mit dem von der Deckplatte (1) abgewandten Ende des Innenschenkels (5) verbunden ist und an seinem der Deckplatte (1) zugewandten Ende über eine Abstützstruktur verfügt, wobei die Abstützstruktur jedes Klammerarmes (6) mit zwei flachen Seitenwangen (15, 16) ausgebildet ist, die an einander gegenüberliegenden Seitenrändern (13, 14) des jeweiligen Außenschenkels (10) angesetzt sind und die sich in Richtung des anderen Klammerarmes (6, 7) erstrecken, und wobei jede Seitenwange (15, 16) eine gegenüber der Deckplatte (1) schräg ausgerichtete, von dem dem jeweiligen Außenschenkel (10) abgewandten Ende in Richtung des Außenschenkels (10) abfallende Stirnseite (17) aufweist, **dadurch gekennzeichnet, dass** an den Seitenwangen (15, 16) auf den der Deckplatte (1) abgewandten Seiten in etwa rechtwinklig zu der Längsrichtung der Klammerarme (6, 7) ausgerichtete Rückseiten (27) ausgebildet sind, die gegenüberliegend von in Aufnahmeausnehmungen (8) eintretenden Stützvorsprüngen (28) angeordnet sind.

2. Befestigungsvorrichtung nach Anspruch 1, **dadurch gekennzeichnet, dass** die über die Außenschenkel (10) überstehende Länge der Seitenwangen (15, 16) kleiner oder höchstens gleich dem Abstand der Innenschenkel (5) im Bereich der Seitenwangen (15, 16) ist.

3. Befestigungsvorrichtung nach Anspruch 1 oder Anspruch 2, **dadurch gekennzeichnet, dass** an der Deckplatte (1) eine Gewindestruktur (3) und an jeder Stirnseite (17) jeder Seitenwange (15, 16) eine Stufenstruktur (18) mit Erhebungen und Vertiefungen ausgebildet ist.

4. Befestigungsvorrichtung nach einem der Ansprüche 1 bis 3, **dadurch gekennzeichnet, dass** an den von den Außenschenkeln (10) abgewandten Enden der Seitenwangen (15, 16) jeweils eine sich in Richtung der Deckplatte (1) erstreckende Abschlusserhebung (19) ausgebildet ist.

5. Befestigungsvorrichtung nach Anspruch 4, **dadurch gekennzeichnet, dass** die Abschlusserhebungen (19) jeweils mit einer in Richtung der Außenschenkel (10) geöffneten Vertiefung (23) ausgebildet sind.

6. Befestigungsvorrichtung nach einem der Ansprüche 1 bis 5, **dadurch gekennzeichnet, dass** in jedem Innenschenkel (5) eine Aufnahmeausnehmung (8) ausgebildet ist, in die die an dem gegenüberliegenden Außenschenkel (10) angesetzten Seitenwangen (15, 16) eingreifen.

7. Befestigungsvorrichtung nach einem der Ansprüche 1 bis 5, **dadurch gekennzeichnet, dass** der Abstand zwischen zwei an einem Außenschenkel (10) angesetzten Seitenwangen (15, 16) größer als die Breite des diesem Außenschenkel (10) gegenüberliegenden Innenschenkels (5) ist.

8. Befestigungsvorrichtung nach einem der Ansprüche 1 bis 7, **dadurch gekennzeichnet, dass** an jedem Innenschenkel (5) im Bereich des jeweiligen Anbindungsabschnittes (9) ein sich in Querrichtung erstreckender Hintergriffsteg (24) und eine sich in Richtung des anderen Innenschenkels (9) erstreckende Hintergriffzunge (25) ausgebildet ist, die den Hintergriffsteg (24) des anderen Innenschenkels (5) hintergreift, so dass die Klammerarme (6, 7) an ihren von der Deckplatte (1) abgewandten Enden gegen ein Aufspreizen miteinander verriegelt sind.

9. Befestigungsvorrichtung nach einem der Ansprüche 1 bis 7, **dadurch gekennzeichnet, dass** an jedem Außenschenkel (10) eine sich in Richtung des anderen Außenschenkels (10) erstreckende Spreizzunge (29) angeformt ist, die durch eine in dem dem jeweiligen Außenschenkel (10) gegenüberliegenden Innenschenkel (9) eingebrachte Freimachung (30) durchgreift.

10. Befestigungsvorrichtung nach Anspruch 9, **dadurch gekennzeichnet, dass** an dem freien Ende jeder Spreizzunge (29) ein flacher Endabschnitt (32) ausgebildet ist, wobei sich die Endabschnitte (32) in einem Abstand in etwa parallel zueinander gegenüberliegen.

## Claims

1. Fastener for insertion in a supporting part (22), having a top plate (1) and having two clip arms (6, 7) which are attached to the top plate (1) on opposite lateral edges and which are situated opposite one another on one side of the top plate (1), each clip arm (6, 7) having an inner limb (5) adjacent the other clip arm (6, 7) and an outer limb (10), remote from the other clip arm (6, 7), which is connected by a connecting portion (9) to the end of the inner limb (5) remote from the top plate (1) and which has a supporting structure at its end adjacent the top plate (1), the supporting structure of each clip arm (6) being formed to have two flat lateral cheek pieces (15, 16) which are attached to lateral edges (13, 14), situated at opposite points from one another, of whichever outer limb (10) is concerned and which extend towards the other clip arm (6, 7), and each lateral cheek piece (15, 16) having a front edge (17) which is obliquely aligned to the top plate (1) and slopes down from the end remote from the outer limb (10) concerned towards the outer limb (10), **characterised in that** there are formed on the lateral cheek pieces (15, 16), at the edges remote from the top plate (1), rear edges (27) which are arranged opposite supporting projections (28) which enter receiving openings (8).

2. Fastener according to claim 1, **characterised in that** the length by which the lateral cheek pieces (15, 16) project beyond the outer limbs (10) is less than or at most equal to the distance between the inner limbs (5) in the region of the lateral cheek pieces (15, 16).

3. Fastener according to claim 1 or claim 2, **characterised in that** a threaded structure (3) is formed at the top plate (1) and a stepped structure (18)having elevations and depressions is formed on each front edge (17) of each lateral cheek piece (15, 16).

4. Fastener according to one of claims 1 to 3, **characterised in that** a terminal elevation (19) extending towards the top plate (1) is formed at the ends remote from the outer limbs (10) of each of the lateral cheek pieces (15, 16).

5. Fastener according to claim 4, **characterised in that** the terminal elevations (19) are each formed to have an indentation (23) which opens towards the outer limbs (10).

6. Fastener according to one of claims 1 to 5, **characterised in that** there is formed in each inner limb (5) a receiving opening (8) in which the lateral cheek pieces (15, 16) attached to the outer limb (10) situated opposite engage.

7. Fastener according to one of claims 1 to 5, **characterised in that** the distance between two lateral cheek pieces (15, 16) attached to an outer limb (10) is greater than the width of the inner limb (5) situated opposite this outer limb (10).

8. Fastener according to one of claims 1 to 7, **characterised in that** there is formed on each inner limb (5), in the region of the given connecting portion (9), a lug to be engaged at the rear (24) which extends in the transverse direction and a tongue to engage at the rear (25) which extends towards the other inner limb (9) and which engages at the rear of the lug to be engaged at the rear (24) on the other inner limb (9), the clip arms (6, 7) thus being locked together against splaying apart at their ends remote from the top plate (1).

9. Fastener according to one of claims 1 to 7, **characterised in that** there is integrally formed on each outer limb (10) a splaying tongue (29), extending towards the other outer limb (10), which fits through an opening (30) which is made in the inner limb (9) situated opposite the outer limb (10) concerned.

10. Fastener according to claim 9, **characterised in that** there is formed at the free end of each splaying tongue (29) a flat end portion (32), the end portion being situated opposite and at a distance and approximately parallel to one another.

## Revendications

1. Dispositif de fixation destiné à être inséré dans un élément faisant office de support (22), comprenant une plaque supérieure (1) et deux pattes d'agrafage (6, 7) attenantes à deux bords latéraux diamétralement opposés de la plaque supérieure (1) ainsi que se faisant respectivement face sur un côté de la plaque supérieure (1), dans lequel chaque patte d'agrafage (6, 7) comprend un segment intérieur (5) orienté vers l'autre patte d'agrafage (6, 7) et un segment extérieur (10) orienté à l'opposé de l'autre patte d'agrafage (6, 7), qui est raccordé, au moyen d'une portion de liaison (9), à l'extrémité du segment intérieur (5) orientée à l'opposé de la plaque supérieure (1) et qui est muni, au niveau de son extrémité orientée vers la plaque supérieure (1), d'une structure d'appui, la structure d'appui de chaque patte d'agrafage (6) comprenant en l'occurrence deux joues latérales plates (15, 16) qui sont attenantes aux bords latéraux (13, 14) se faisant respectivement face du segment extérieur (10) respectif et qui s'étendent dans la direction de l'autre patte d'agrafage (6, 7), et chaque joue latérale (15, 16) comprenant en l'occurrence une face antérieure (17) disposée obliquement par rapport à la plaque supérieure (1) s'étendant, suivant un tracé incliné, depuis l'extrémité orientée à l'opposé de chaque segment extérieur respectif (10), dans la direction du segment extérieur (10), **caractérisé en ce qu'**il est prévu, sur les joues latérales (15, 16), sur les côtés orientés à l'opposé de la plaque supérieure (1), des parties arrières (27) agencées selon une orientation sensiblement perpendiculaire à la direction longitudinale des pattes d'agrafage (6, 7), qui sont disposées à l'opposé de bossages d'appui (28) s'insérant dans des ouvertures de réception (8).

2. Dispositif de fixation selon la revendication 1, **caractérisé en ce que** la longueur dans la proportion de laquelle les joues latérales (15, 16) font saillie au-dessus du segment extérieur (10) est inférieure ou tout au plus égale à l'intervalle d'écartement des segments intérieurs (5) dans la zone des joues latérales (15, 16).

3. Dispositif de fixation selon la revendication 1 ou la revendication 2, **caractérisé en ce que** la plaque supérieure (1) comporte une structure filetée (3) et chaque face antérieure (17) de chaque joue latérale (15, 16) une structure en gradins (18) constituée par une succession de protubérances et de dépressions.

4. Dispositif de fixation selon l'une des revendications 1 à 3, **caractérisé en ce qu'**il est respectivement prévu, au niveau des extrémités des joues latérales (15, 16) orientées à l'opposé des segments extérieurs (10), une protubérance d'extrémité (19) s'étendant dans la direction de la plaque supérieure (1).

5. Dispositif de fixation selon la revendication 4, **caractérisé en ce que** les protubérances d'extrémité (19) comportent respectivement une partie en creux (23) ouverte dans la direction des segments extérieurs (10).

6. Dispositif de fixation selon l'une des revendications 1 à 5, **caractérisé en ce qu'**il est prévu, dans chaque segment intérieur (5), une ouverture de réception (8), dans laquelle les joues latérales (15, 16) attenantes au segment extérieur (10) opposé viennent s'insérer en prise d'encastrement.

7. Dispositif de fixation selon l'une des revendications 1 à 5, **caractérisé en ce que** l'intervalle d'écartement entre deux joues latérales (15, 16) attenantes à un segment extérieur (10) est plus grand que la largeur du segment intérieur (5) disposé à l'opposé de ce segment extérieur (10).

8. Dispositif de fixation selon l'une des revendications 1 à 7, **caractérisé en ce qu'**il est prévu, sur chaque segment intérieur (5), dans la zone de la portion de liaison (9) respective, une nervure de mise en prise d'accrochage par derrière (24) s'étendant dans le sens transversal et une languette de mise en prise d'accrochage par derrière (25) s'étendant dans la direction de l'autre segment intérieur (5), qui vient cramponner par derrière la nervure de mise en prise d'accrochage (24) de l'autre segment intérieur (5), ce qui fait que les pattes d'agrafage (6, 7) sont verrouillées ensemble au niveau de leurs extrémités opposées à la plaque supérieure (1) dans l'impossibilité de s'écarter l'une de l'autre.

9. Dispositif de fixation selon l'une des revendications 1 à 7, **caractérisé en ce que** chaque segment extérieur (10) comporte une languette expansible (29) réalisée solidaire de celui-ci par formage, s'étendant en direction de l'autre segment extérieur (10), qui s'engage en prise au travers d'un dégagement (30) ménagé dans le segment intérieur (5) opposé au segment extérieur ( 10) respectif.

10. Dispositif de fixation selon la revendication 9, **caractérisé en ce qu'**il est prévu au niveau de l'extrémité libre de chaque languette expansible (29) une portion d'extrémité aplatie (32), lesdites portions d'extrémité (32) étant en l'occurrence disposées face à face à une certaine distance l'une de l'autre selon une orientation sensiblement parallèle.
